(19) Europäisches Patentamt / European Patent Office / Office européen des brevets

(11) EP 2 004 701 B1

(12) **EUROPÄISCHE PATENTSCHRIFT**

(45) Veröffentlichungstag und Bekanntmachung des Hinweises auf die Patenterteilung:
**22.07.2009 Patentblatt 2009/30**

(21) Anmeldenummer: **07727426.4**

(22) Anmeldetag: **28.03.2007**

(51) Int Cl.:
***C08F 2/24*** *(2006.01)* ***C08F 220/10*** *(2006.01)*
***C08F 222/10*** *(2006.01)* ***C08F 210/14*** *(2006.01)*

(86) Internationale Anmeldenummer:
**PCT/EP2007/052953**

(87) Internationale Veröffentlichungsnummer:
**WO 2007/113180 (11.10.2007 Gazette 2007/41)**

# (54) VERFAHREN ZUR HERSTELLUNG EINER WÄSSRIGEN POLYMERISATDISPERSION

PROCESS FOR PREPARING AN AQUEOUS POLYMER DISPERSION

PROCEDE DE FABRICATION D'UNE DISPERSION AQUEUSE DE POLYMERES

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **06.04.2006 EP 06112325**

(43) Veröffentlichungstag der Anmeldung:
**24.12.2008 Patentblatt 2008/52**

(73) Patentinhaber: **BASF SE**
**67056 Ludwigshafen (DE)**

(72) Erfinder: **VENKATESH, Rajan**
**68167 Mannheim (DE)**

(56) Entgegenhaltungen:
**WO-A-20/07012616**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 004 701 B1

## Beschreibung

Gegenstand der vorliegenden Erfindung ist ein Verfahren zur Herstellung einer wässrigen Polymerisatdispersion durch radikalisch initiierte wässrige Emulsionspolymerisation von ethylenisch ungesättigten Monomeren in Anwesenheit wenigstens eines Dispergiermittels und wenigstens eines Radikalinitiators, wobei zur Emulsionspolymerisation

| | |
|---|---|
| 1 bis 50 Gew.-% | eines 5 bis 12 C-Atome aufweisenden Alkens [Monomer A], und |
| 50 bis 99 Gew.-% | eines Esters auf Basis einer 3 bis 6 C-Atome aufweisenden $\alpha,\beta$-monoethylenisch ungesättigten Mono- oder Dicarbonsäure und eines 1 bis 12 C-Atome aufweisenden Alkanols [Monomer B], sowie gegebenenfalls |
| 0 bis 10 Gew.-% | einer 3 bis 6 C-Atome aufweisenden $\alpha,\beta$-monoethylenisch ungesättigten Mono- oder Dicarbonsäure und/öder deren Amid [Monomer C] und |
| 0 bis 30 Gew.-% | einer sich von den Monomeren A bis C unterscheidenden $\alpha,\beta$-ethylenisch ungesättigten Verbindung [Monomer D], |

eingesetzt werden und sich die Monomeren A bis D zu 100 Gew.-% addieren, welches dadurch gekennzeichnet ist, dass wenigstens 50 Gew.-% der Gesamtmenge an Monomeren A und optional bis zu jeweils 10 Gew.-% der Gesamtmengen an Monomeren B bis D im Polymerisationsgefäß vor Initiierung der Polymerisationsreaktion vorgelegt werden und die gegebenenfalls verbliebene Restmenge an Monomeren A und die Gesamtmengen bzw. die gegebenenfalls verbliebenen Restmengen der Monomeren B bis D dem Polymerisationsgefäß unter Polymerisationsbedingungen zugeführt werden.

Verfahren zur Herstellung von Polymerisaten auf Basis von Alkenen und anderen copolymerisierbaren ethylenisch ungesättigten Verbindungen sind dem Fachmann hinreichend bekannt. Dabei erfolgt die Copolymerisation im wesentlichen in Form einer Lösungspolymerisation (siehe beispielsweise A. Sen et al., Journal American Chemical Society, 2001, 123, Seiten 12738 bis12739; B. Klumperman et al., Macromolecules, 2004, 37, Seiten 4406 bis 4416; A. Sen et al., Journal of Polymer Science, Part A: Polymer Chemistry, 2004, 42(24), Seiten 6175 bis 6192; WO 03/042254, WO 03/091297 oder EP-A 1384729) oder in Form einer wässrigen Emulsionspolymerisation, wobei diese insbesondere auf Basis des niedrigsten Alkens Ethen erfolgt (siehe beispielsweise US-A 4921898, US-A 5070134, US-A 5110856, US-A 5629370, EP-A 295727, EP-A 757065, EP-A 1114833 oder DE-A 19620817).

Zur radikalisch initiierten wässrigen Emulsionspolymerisation unter Verwendung höherer Alkene ist von nachfolgendem Stand der Technik auszugehen.

In der DE-OS 1720277 wird ein Verfahren zur Herstellung von filmbildenden wässrigen Polymerisatdispersionen unter Verwendung von Vinylestern und 1-Octen offenbart. Dabei kann das Gewichtsverhältnis von Vinylester zu 1-Octen von 99:1 bis 70:30 betragen. Optional können die Vinylester im untergeordneten Maße im Gemisch mit anderen copolymerisierbaren ethylenisch ungesättigten Verbindungen zur Emulsionspolymerisation eingesetzt werden.

S.M. Samoilov beschreibt in J. Macromol. Sci. Chem., 1983, A19(1), Seiten 107 bis 122, die radikalisch initiierte wässrige Emulsionspolymerisation von Propen mit unterschiedlichen ethylenisch ungesättigen Verbindungen. Dabei wurde als Ergebnis festgehalten, dass die Copolymerisation von Propen mit ethylenisch ungesättigten Verbindungen, welche stark elektronenziehende Gruppen aufweisen, wie beispielsweise Chlortrifluorethylen, Trifluoracrylonitril, Maleinsäureanhydrid oder Methyltrifluoracrylat, Polymerisate mit einem deutlich höheren Propenanteil bzw. Copolymerisate mit höheren Molekulargewichten lieferten, als bei Verwendung der bei der radikalisch initiierten wässrigen Emulsionspolymerisation üblichen ethylenisch ungesättigten Verbindungen Vinylacetat, Vinylchlorid, Acrylsäuremethyl- bzw. -butylester. Dieses Verhalten wird insbesondere mit den bei den höheren Alkenen üblichen Wasserstoffradikalübertragungsreaktionen begründet.

In der von der Anmelderin unter dem Anmeldekennzeichen DE 10 2005 035 692.3 eingereichten deutschen Patentanmeldung wird die Herstellung von wässrigen Polymerisatdispersionen auf der Basis 5 bis 12 C-Atome aufweisender Alkene offenbart. Dabei werden die 5 bis 12 C-Atome aufweisenden Alkene dem Polymerisationsgemisch unter Polymerisationsbedingungen zudosiert.

Der vorliegenden Erfindung lag die Aufgabe zugrunde, das in der deutschen Patentanmeldung DE 10 2005 035 692.3 offenbarte Herstellverfahren für wässrige Polymerisatdispersionen hinsichtlich der erzielbaren Monomerumsätze zu verbessern.

Überraschenderweise wurde die Aufgabe durch das eingangs definierte Verfahren gelöst.

Die Durchführung von radikalisch initiierten Emulsionspolymerisationen von ethylenisch ungesättigten Monomeren in einem wässrigen Medium ist vielfach vorbeschrieben und dem Fachmann daher hinreichend bekannt [vgl. hierzu Emulsionspolymerisation in Encyclopedia of Polymer Science and Engineering, Vol. 8, Seiten 659 ff. (1987); D.C. Blackley, in High Polymer Latices, Vol. 1, Seiten 35 ff. (1966); H. Warson, The Applications of Synthetic Resin Emulsions, Kapitel 5, Seiten 246 ff. (1972); D. Diederich, Chemie in unserer Zeit 24, Seiten 135 bis 142 (1990); Emulsion Polymerisation, Interscience Publishers, New York (1965); DE-A 40 03 422 und Dispersionen synthetischer Hochpolymerer, F. Hölscher, Springer-Verlag, Berlin (1969)]. Die radikalisch initiierten wässrigen Emulsionspolymerisationsreaktionen erfolgen üblicherweise dergestalt, dass man die ethylenisch ungesättigten Monomere unter Mitverwendung von Dispergiermitteln, im wässrigen Medium in Form von Monomerentröpfchen dispers verteilt und mittels eines radikalischen Polymerisationsinitiators polymerisiert. Von dieser Verfahrensweise unterscheidet sich das vorliegende Verfahren lediglich im Einsatz einer spezifischen Monomerenzusammensetzung und der spezifischen Monomerenzuführung.

Im vorliegenden erfindungsgemäßen Verfahren wird Wasser, häufig in Trinkwasserqualität, insbesondere bevorzugt jedoch entionisiertes Wasser verwendet, dessen Gesamtmenge so bemessen wird, dass sie ≥ 30 und ≤ 90 Gew.-% und vorteilhaft ≥ 40 und ≤ 75 Gew.-%, jeweils bezogen auf die durch das erfindungsgemäße Verfahren zugängliche wässrige Polymerisatdispersion, beträgt.

Erfindungsgemäß ist es möglich, eine Teil- oder die Gesamtmenge an Wasser im Polymerisationsgefäß vorzulegen und die gegebenenfalls verbliebene Restmenge an Wasser nach Initiierung der Polymerisationsreaktion zuzudosieren. Dabei kann die gegebenenfalls verbliebene Restmenge an Wasser dem Polymerisationsgefäß diskontinuierlich in einer oder mehrerer Portionen oder kontinuierlich mit gleichbleibenden oder sich verändernden Mengenströmen zudosiert werden. Insbesondere vorteilhaft erfolgt die Dosierung an Wasser kontinuierlich mit gleichbleibenden Mengenströmen, insbesondere als Bestandteil einer wässrigen Monomerenemulsion und/oder einer wässrigen Lösung des Radikalstarters.

Als Monomere A können alle linearen oder cyclischen 5 bis 12 C-Atome, bevorzugt 5 bis 10 C-Atome und insbesondere bevorzugt 6 bis 8 C-Atome aufweisenden Alkene eingesetzt werden, welche sich radikalisch copolymerisieren lassen und welche neben Kohlenstoff und Wasserstoff keine weiteren Elemente aufweisen. Hierzu zählen beispielsweise die linearen Alkene 2-Methylbuten-1, 3-Methylbuten-1, 3,3-Dimethyl-2-isopropylbuten-1, 2-Methylbuten-2, 3-Methylbuten-2, Penten-1, 2-Methylpenten-1, 3-Methylpenten-1, 4-Methylpenten-1, Penten-2, 2-Methylpenten-2, 3-Methylpenten-2, 4-Methylpenten-2, 2-Ethylpenten-1, 3-Ethylpenten-1, 4-Ethylpenten-1, 2-Ethylpenten-2, 3-Ethylpenten-2, 4-Ethylpenten-2, 2,4,4-Trimethylpenten-1, 2,4,4-Trimethylpenten-2, 3-Ethyl-2-methylpenten-1, 3,4,4-Trimethylpenten-2, 2-Methyl-3-ethylpenten-2, Hexen-1, 2-Methylhexen-1, 3-Methylhexen-1, 4-Methylhexen-1, 5-Methylhexen-1, Hexen-2, 2-Methylhexen-2, 3-Methylhexen-2, 4-Methylhexen-2, 5-Methylhexen-2, Hexen-3, 2-Methylhexen-3, 3-Methylhexen-3, 4-Methylhexen-3, 5-Methylhexen-3, 2,2-Dimethylhexen-3, 2,3-Dimethylhexen-2, 2,5-Dimethylhexen-3, 2,5-Dimethylhexen-2, 3,4-Dimethylhexen-1, 3,4-Dimethylhexen-3, 5,5-Dimethylhexen-2, 2,4-Dimethylhexen-1, Hepten-1, 2-Methylhepten-1, 3-Methylhepten-1, 4-Methylhepten-1, 5-Methylhepten-1, 6-Methylhepten-1, Hepten-2, 2-Methylhepten-2, 3-Methylhepten-2, 4-Methylhepten-2, 5-Methylhepten-2, 6-Methylhepten-2, Hepten-3, 2-Methylhepten-3, 3-Methylhepten-3, 4-Methylhepten-3, 5-Methylhepten-3, 6-Methylhepten-3, 6,6-Dimethylhepten-1, 3,3-Dimethylhepten-1, 3,6-Dimethylhepten-1, 2,6-Dimethylhepten-2, 2,3-Dimethylhepten-2, 3,5-Dimethylhepten-2, 4,5-Dimethylhepten-2, 4,6-Dimethylhepten-2, 4-Ethylhepten-3, 2,6-Dimethylhepten-3, 4,6-Dimethylhepten-3, 2,5-Dimethylhepten-4, Octen-1, 2-Methylocten-1, 3-Methylocten-1, 4-Methylocten-1, 5-Methylocten-1, 6-Methylocten-1, 7-Methylocten-1, Octen-2, 2-Methylocten-2, 3-Methylocten-2, 4-Methylocten-2, 5-Methylocten-2, 6-Methylocten-2, 7-Methylocten-2, Octen-3, 2-Methylocten-3, 3-Methylocten-3, 4-Methylocten-3, 5-Methylocten-3, 6-Methylocten-3, 7-Methylocten-3,Octen-4, 2-Methylocten-4, 3-Methylocten-4, 4-Methylocten-4, 5-Methylocten-4, 6-Methylocten-4, 7-Methylocten-4, 7,7-Dimethylocten-1, 3,3-Dimethylocten-1, 4,7-Dimethylocten-1, 2,7-Dimethylocten-2, 2,3-Dimethylocten-2, 3,6-Dimethylocten-2, 4,5-Dimethylocten-2, 4,6-Dimethylocten-2, 4,7-Dimethylocten-2, 4-Ethylocten-3, 2,7-Dimethylocten-3, 4,7-Dimethylocten-3, 2,5-Dimethylocten-4, Nonen-1, 2-Methylnonen-1, 3-Methylnonen-1, 4-Methylnonen-1, 5-Methylnonen-1, 6-Methylnonen-1, 7-Methylnonen-1, 8-Methylnonen-1, Nonen-2, 2-Methylnonen-2, 3-Methylnonen-2, 4-Methylnonen-2, 5-Methylnonen-2, 6-Methylnonen-2, 7-Methylnonen-2, 8-Methylnonen-2, Nonen-3, 2-Methylnonen-3, 3-Methylnonen-3, 4-Methylnonen-3, 5-Methylnonen-3, 6-Methylnonen-3, 7-Methylnonen-3, 8-Methylnonen-3, Nonen-4, 2-Methylnonen-4, 3-Methylnonen-4, 4-Methylnonen-4, 5-Methylnonen-4, 6-Methylnonen-4, 7-Methylnonen-4, 8-Methylnonen-4, 4,8-Dimethylnonen-1, 4,8-Dimethylnonen-4, 2,8-Dimethylnonen-4, Decen-1, 2-Methyldecen-1, 3-Methyldecen-1, 4-Methyldecen-1, 5-Methyldecen-1, 6-Methyldecen-1, 7-Methyldecen-1, 8-Methyldecen-1, 9-Methyldecen-1 Decen-2, 2-Methyldecen-2, 3-Methyldecen-2, 4-Methyldecen-2, 5-Methyldecen-2, 6-Methyldecen-2, 7-Methyldecen-2, 8-Methyldecen-2, 9-Methyldecen-2, Decen-3, 2-Methyldecen-3, 3-Methyldecen-3, 4-Methyldecen-3, 5-Methyldecen-3, 6-Methyldecen-3, 7-Methyldecen-3, 8-Methyldecen-3, 9-Methyldecen-3, Decen-4, 2-Methyldecen-4, 3-Methyldecen-4, 4-Methyldecen-4, 5-Methyldecen-4, 6-Methyldecen-4, 7-Methyldecen-4, 8-Methyldecen-4, 9-Methyldecen-4, Decen-5, 2-Methyldecen-5, 3-Methyldecen-5, 4-Methyldecen-5, 5-Methyldecen-5, 6-Methyldecen-5, 7-Methyldecen-5, 8-Methyldecen-5, 9-Methyldecen-5, 2,4-Dimethyldecen-1, 2,4-Dimethyldecen-2, 4,8-Dimethyldecen-1, Undecen-1, 2-Methylundecen-1, 3-Methylundecen-1, 4-Methylundecen-1, 5-Methylundecen-1, 6-Methylundecen-1, 7-Methylundecen-1, 8-Methylundecen-1, 9-Methylundecen-1, 10-Methylundecen-1, Undecen-2, 2-Methylundecen-2, 3-Methylundecen-2, 4-Methylundecen-2, 5-Methylundecen-2, 6-Methylundecen-2, 7-Methylundecen-2, 8-Methylundecen-2, 9-Methylundecen-2, 10-Methylundecen-2, Undecen-3, 2-Methylundecen-3, 3-Methylundecen-3, 4-Methylundecen-3, 5-Methylundecen-3, 6-Methylundecen-3, 7-Methylundecen-3, 8-Methylundecen-3, 9-Methylundecen-3, 10-Methylundecen-3, Undecen-4, 2-Methylundecen-4, 3-Methylundecen-4, 4-Methylundecen-4, 5-Methylundecen-4, 6-Methylundecen-4, 7-Methylundecen-4, 8-Methylundecen-4, 9-Methylundecen-4, 10-Methylundecen-4, Undecen-5, 2-Methylundecen-5, 3-Methylundecen-5, 4-Methylundecen-5, 5-Methylundecen-5, 6-Methylundecen-5, 7-Methylundecen-5, 8-Methylundecen-5, 9-Methylundecen-5, 10-Methylundecen-5, Dodecen-1, Dodecen-2, Dodecen-3, Ddoecen-4, Dodecen-5 oder Dodecen-6 sowie die cyclischen Alkene Cyclopenten, 2-Methylcyclopenten-1, 3-Methylcyclopenten-1, 4-Methylcyclopenten-1, 3-Butylcyclopenten-1, Vinylcyclopentan, Cyclohexen, 2-Methylcyclohexen-1, 3-Methylcyclohexen-1, 4-Methylcyclohexen-1, 1,4-Dimethylcyclohexen-1, 3,3,5-Trimethylcyclohexen-1, 4-Cyclopentylcyclohexen-1, Vinylcyclohexan, Cyclohepten, 1,2-Dimethylcyclohepten-1, Cycloocten, 2-Methylcycloocten-1, 3-Methylcycloocten-1, 4-Methylcycloocten-1, 5-Methylcycloocten-1, Cyclononen, Cyclodecen, Cycloundecen, Cyclododecen, Bicyclo[2.2.1]hepten-2, 5-Ethylbicyclo[2.2.1]hepten-2, 2-Methylbicyclo[2.2.2]octen-2, Bicyclo[3.3.1]nonen-2 oder Bicyclo[3.2.2]nonen-6.

Bevorzugt werden die 1-Alkene eingesetzt, beispielsweise Penten-1, Hexen-1, Hepten-1, Octen-1, Nonen-1, Decen-1, Undecen-1, Dodecen-1, 2,4,4-Trimethylpenten-1, 2,4-Dimethylhexen-1, 6,6-Dimethylhepten-1 oder 2-Methylocten-1. Vorteilhaft wird als Monomer A ein 6 bis 8 C-Atome aufweisendes Alken, bevorzugt ein 6 bis 8 C-Atome aufweisendes 1-Alken eingesetzt. Insbesondere bevorzugt werden Hexen-1, Hepten-1 oder Octen-1 eingesetzt. Selbstverständlich können auch Gemische vorgenannter Monomere A eingesetzt werden.

Als Monomere B finden Ester auf Basis einer 3 bis 6 C-Atome, insbesondere einer 3 oder 4 C-Atome aufweisenden α,β-monoethylenisch ungesättigten Mono- oder Dicarbonsäure, wie insbesondere Acrylsäure, Methacrylsäure, Maleinsäure, Fumarsäure und Itaconsäure und eines 1 bis 12 C-Atome aufweisenden Alkanols, vorzugsweise eines 1 bis 8 C-Atome aufweisenden Alkanols und insbesondere eines 1 bis 4 C-Atome aufweisenden Alkanols, wie insbesondere Methanol, Ethanol, n-Propanol, isoPropanol, n-Butanol, 2-Methylpropanol-1, tert.-Butanol, n-Pentanol, 3-Methylbutanol-1, n-Hexanol, 4-Methylpentanol-1, n-Heptanol, 5-Methylhexanol-1, n-Octanol, 6-Methylheptanol-1, n-Nonanol, 7-Methyloctanol-1, n-Decanol, 8-Methylnonanol-1, n-Dodecanol, 9-Methyldecanol-1 oder 2-Ethylhexanol-1 Verwendung. Vorzugsweise werden Acrylsäure- und Methacrylsäuremethyl-, -ethyl-, -n-butyl-, -iso-butyl-, pentyl-, - hexyl-, -heptyl-, -octyl-, -nonyl-, -decyl-, -2-ethylhexyl-, oder dodecylester, Fumar- und Maleinsäuredimethylester oder -di-n-butylester eingesetzt. Selbstverständlich können auch Gemische vorgenannter Ester eingesetzt werden.

Als Monomere C werden optional 3 bis 6 C-Atome aufweisende α,β-monoethylenisch ungesättigte Mono- oder Dicarbonsäuren und/oder deren Amide, wie insbesondere Acrylsäure, Methacrylsäure, Maleinsäure, Fumarsäure oder Itaconsäure bzw. Acrylamid oder Methacrylamid eingesetzt. Selbstverständlich können auch Gemische vorgenannter Monomere C eingesetzt werden.

Als Monomere D, welche sich von den Monomeren A bis C unterscheiden, finden beispielsweise α,β-ethylenisch ungesättigte Verbindungen, wie beispielsweise vinylaromatische Monomere, wie Styrol, α-Methylstyrol, o-Chlorstyrol oder Vinyltoluole, Vinylhalogenide, wie Vinylchlorid oder Vinylidenchlorid, Ester aus Vinylalkohol und 1 bis 18 C-Atome aufweisenden Monocarbonsäuren, wie Vinylacetat, Vinylpropionat, Vinyl-n-butyrat, Vinyllaurat und Vinylstearat, Nitrile α,β-mono- oder diethylenisch ungesättigter Carbonsäuren, wie Acrylnitril, Methacrylnitril, Fumarsäuredinitril, Maleinsäuredinitril sowie 4 bis 8 C-Atome aufweisende konjugierte Diene, wie 1,3-Butadien und Isopren, darüber hinaus Vinylsulfonsäure, 2-Acrylamido-2-methylpropansulfonsäure, Styrolsulfonsäure und deren wasserlösliche Salze sowie N-Vinylpyrrolidon, 2-Vinylpyridin, 4-Vinylpyridin, 2-Vinylimidazol, 2-(N,N-Dimethylamino)ethylacrylat, 2-(N,N-Dimethylamino) ethylmethacrylat, 2-(N,N-Diethylamino)ethylacrylat, 2-(N,N-Diethylamino)ethylmethacrylat, 2-(N-tert.-Butylamino)ethylmethacrylat, N-(3-N',N'-Dimethylaminopropyl)methacrylamid oder 2-(1-Imidazolin-2-onyl)ethylmethacrylat Verwendung. Weitere Monomere D weisen wenigstens eine Epoxy-, Hydroxy-, N-Methylol- oder Carbonylgruppe, oder wenigstens zwei nicht konjugierte ethylenisch ungesättigte Doppelbindungen auf. Beispiele hierfür sind zwei Vinylreste aufweisende Monomere, zwei Vinylidenreste aufweisende Monomere sowie zwei Alkenylreste aufweisende Monomere. Besonders vorteilhaft sind dabei die Di-Ester zweiwertiger Alkohole mit α,β-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und - dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylate und Ethylenglykoldimethacrylat, 1,2-Propylenglykoldimethacrylat, 1,3-Propylenglykoldimethacrylat, 1,3-Butylenglykoldimethacrylat, 1,4-Butylenglykoldimethacrylat sowie Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Triallylcyanurat oder Triallylisocyanurat. In diesem Zusammenhang von besonderer Bedeutung sind auch die Methacrylsäure- und Acrylsäure-$C_1$-$C_8$-Hydroxyalkylester wie n-Hydroxyethyl-, n-Hydroxypropyl- oder n-Hydroxybutylacrylat und -methacrylat sowie Verbindungen, wie Glycidylacrylat oder -methacrylat, Diacetonacrylamid und Acetylacetoxyethylacrylat bzw. -methacrylat. Selbstverständlich können auch Gemische von Monomeren D eingesetzt werden.

Bevorzugt werden jedoch zur radikalisch initiierten wässrigen Emulsionspolymerisation

| | |
|---|---|
| 1 bis 49,99 Gew.-% | Monomere A, und |
| 50 bis 98,99 Gew.-% | Monomere B, sowie |
| 0,01 bis 10 Gew.-% | Monomere C |

eingesetzt. Als Monomere A werden insbesondere Penten-1, Hexen-1, Hepten-1, Octen-1, 3-Methylhexen-1, 3-Methylhepten-1 und/oder 3-Methylocten-1, als Monomere B insbesondere n-Butylacrylat, Methylacrylat, 2-Ethylhexylacrylat, Methylmethacrylat und/oder tert.-Butylacrylat und als Monomere C insbesondere Acrylsäure, Methacrylsäure und/oder Itaconsäure eingesetzt.

Insbesondere bevorzugt werden zur radikalisch initiierten wässrigen Emulsionspolymerisation

| | |
|---|---|
| 5 bis 40 Gew.-% | Penten-1, Hexen-1 und/oder Octen-1 [Monomere A], und |
| 56 bis 94,9 Gew.-% | n-Butylacrylat, Methylacrylat, 2-Ethylhexylacrylat, Methylmethacrylat und/oder tert.-Butylacrylat [Monomere B], sowie |
| 0,1 bis 4 Gew.-% | Acrylsäure und/oder Methacrylsäure [Monomere C], |

eingesetzt.

Verfahrenswesentlich ist, dass wenigstens 50 Gew.-% der Gesamtmenge an Monomeren A im Polymerisationsgefäß vor Initiierung der Polymerisationsreaktion vorgelegt werden und die gegebenenfalls verbliebene Restmenge an Monomeren A und die Gesamtmengen bzw. die gegebenenfalls verbliebenen Restmengen der Monomeren B bis D dem Polymerisationsgefäß unter Polymerisationsbedingungen zugeführt werden.

Vorteilhaft werden ≥ 60 Gew.-% oder ≥ 70 Gew.-% und insbesondere vorteilhaft ≥ 80 Gew.-% oder ≥ 90 Gew.-% der Gesamtmenge oder sogar die Gesamtmenge an Monomeren A im Polymerisationsgefäß vor Initiierung der Polymerisationsreaktion vorgelegt. Die Zudosierung der gegebenenfalls verbliebenen Restmenge an Monomeren A, d.h. ≤ 50 Gew.-%, ≤ 40 Gew.-%, ≤ 30 Gew.-%, ≤ 20 Gew.-% oder ≤ 10 Gew.-% der Gesamtmenge an Monomeren A nach Initiierung der radikalischen Polymerisationsreaktion, kann dabei diskontinuierlich in einer Portion, diskontinuierlich in mehreren Portionen sowie kontinuierlich mit gleichbleibenden oder sich verändernden Mengenströmen erfolgen. Bevorzugt wird die Gesamtmenge an Monomeren A im Polymerisationsgefäß vor Initiierung der Polymerisationsreaktion vorgelegt.

Erfindungsgemäß können optional bis zu jeweils 10 Gew.-%, häufig ≤ 5 Gew.-% der Gesamtmengen an Monomeren B bis D im Polymerisationsgefäß vor Initiierung der Polymerisationsreaktion vorgelegt werden. Mit Vorteil werden keine Monomeren B bis D im Polymerisationsgefäß vorgelegt. Die gegebenenfalls verbliebenen Restmengen bzw. die Gesamtmengen an Monomeren B bis D können dem Polymerisationsgefäß nach Initiierung der radikalischen Polymerisationsreaktion, diskontinuierlich in einer Portion, diskontinuierlich in mehreren Portionen sowie kontinuierlich mit gleichbleibenden oder sich verändernden Mengenströmen zugegeben werden. Vorteilhaft erfolgt die Zugabe der Monomeren B bis D kontinuierlich mit gleichbleibenden Mengenströmen. Mit Vorteil erfolgt die Zugabe der Monomeren B bis D in Form eines Monomerengemisches und insbesondere vorteilhaft in Form einer wässrigen Monomerenemulsion.

Erfindungsgemäß werden im Rahmen des vorliegenden Verfahrens Dispergiermittel mitverwendet, die sowohl die Monomerentröpfchen, wie auch die gebildeten Polymerisatteilchen im wässrigen Medium dispers verteilt halten und so die Stabilität der erzeugten wässrigen Polymerisatdispersion gewährleisten. Als Dispergiermittel kommen sowohl die zur Durchführung von radikalischen wässrigen Emulsionspolymerisationen üblicherweise eingesetzten Schutzkolloide als auch Emulgatoren in Betracht.

Geeignete Schutzkolloide sind beispielsweise Polyvinylalkohole, Polyalkylenglykole, Alkalimetallsalze von Polyacrylsäuren und Polymethacrylsäuren, Gelatinederivate oder Acrylsäure, Methacrylsäure, Maleinsäureanhydrid, 2-Acrylamido-2-methylpropansulfonsäure und/oder 4-Styrolsulfonsäure enthaltende Copolymerisate und deren Alkalimetallsalze aber auch N-Vinylpyrrolidon, N-Vinylcaprolactam, N-Vinylcarbazol, 1-Vinylimidazol, 2-Vinylimidazol, 2-Vinylpyridin, 4-Vinylpyridin, Acrylamid, Methacrylamid, amingruppentragende Acrylate, Methacrylate, Acrylamide und/oder Methacrylamide enthaltende Homo- und Copolymerisate. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart, 1961, Seiten 411 bis 420.

Selbstverständlich können auch Gemische aus Schutzkolloiden und/oder Emulgatoren eingesetzt werden. Häufig werden als Dispergiermittel ausschließlich Emulgatoren eingesetzt, deren relative Molekulargewichte im Unterschied zu den Schutzkolloiden üblicherweise unter 1000 liegen. Sie können sowohl anionischer, kationischer oder nichtionischer Natur sein. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Im allgemeinen sind anionische Emulgatoren untereinander und mit nichtionischen Emulgatoren verträglich. Desgleichen gilt auch für kationische Emulgatoren, während anionische und kationische Emulgatoren meistens nicht miteinander verträglich sind. Eine Übersicht geeigneter Emulgatoren findet sich in Houben-Weyl, Methoden der organischen Chemie, Band XIV/1, Makromolekulare Stoffe, Georg-Thieme-Verlag, Stuttgart, 1961, Seiten 192 bis 208.

Erfindungsgemäß werden als Dispergiermittel jedoch insbesondere Emulgatoren eingesetzt.

Gebräuchliche nichtionische Emulgatoren sind z.B. ethoxylierte Mono-, Di- und Tri-Alkylphenole (EO-Grad: 3

bis 50, Alkylrest: $C_4$ bis $C_{12}$) sowie ethoxylierte Fettalkohole (EO-Grad: 3 bis 80; Alkylrest: $C_8$ bis $C_{36}$). Beispiele hierfür sind die Lutensol® A-Marken ($C_{12}C_{14}$-Fettalkoholethoxylate, EO-Grad: 3 bis 8), Lutensol® AO-Marken ($C_{13}C_{15}$-Oxoalkoholethoxylate, EO-Grad: 3 bis 30), Lutensol® AT-Marken ($C_{16}C_{18}$-Fettalkoholethoxylate, EO-Grad: 11 bis 80), Lutensol® ON-Marken ($C_{10}$-Oxoalkoholethoxylate, EO-Grad: 3 bis 11) und die Lutensol® TO-Marken ($C_{13}$-Oxoalkoholethoxylate, EO-Grad: 3 bis 20) der Fa. BASF AG.

Übliche anionische Emulgatoren sind z.B. Alkalimetall- und Ammoniumsalze von Alkylsulfaten (Alkylrest: $C_8$ bis $C_{12}$), von Schwefelsäurehalbestern ethoxylierter Alkanole (EO-Grad: 4 bis 30, Alkylrest: $C_{12}$ bis $C_{18}$) und ethoxylierter Alkylphenole (EO-Grad: 3 bis 50, Alkylrest: $C_4$ bis $C_{12}$), von Alkylsulfonsäuren (Alkylrest: $C_{12}$ bis $C_{18}$) und von Alkylarylsulfonsäuren (Alkylrest: $C_9$ bis $C_{18}$).

Als weitere anionische Emulgatoren haben sich ferner Verbindungen der allgemeinen Formel (I)

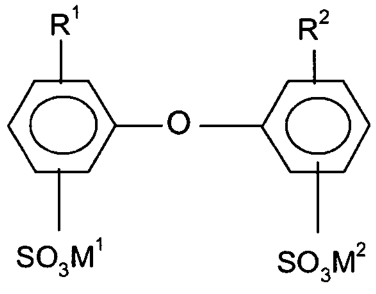

(I),

worin $R^1$ und $R^2$ H-Atome oder $C_4$- bis $C_{24}$-Alkyl bedeuten und nicht gleichzeitig H-Atome sind, und $M^1$ und $M^2$ Alkalimetallionen und/oder Ammoniumionen sein können, als geeignet erwiesen. In der allgemeinen Formel (I) bedeuten $R^1$ und $R^2$ bevorzugt lineare oder verzweigte Alkylreste mit 6 bis 18 C-Atomen, insbesondere mit 6, 12 und 16 C-Atomen oder Wasserstoff, wobei $R^1$ und $R^2$ nicht beide gleichzeitig H-Atome sind. $M^1$ und $M^2$ sind bevorzugt Natrium, Kalium oder Ammonium, wobei Natrium besonders bevorzugt ist. Besonders vorteilhaft sind Verbindungen (I), in denen $M^1$ und $M^2$ Natrium, $R^1$ ein verzweigter Alkylrest mit 12 C-Atomen und $R^2$ ein H-Atom oder $R^1$ ist. Häufig werden technische Gemische verwendet, die einen Anteil von 50 bis 90 Gew.-% des monoalkylierten Produktes aufweisen, wie beispielsweise Dowfax® 2A1 (Marke der Dow Chemical Company). Die Verbindungen (I) sind allgemein bekannt, z.B. aus US-A 4269749, und im Handel erhältlich.

Geeignete kationenaktive Emulgatoren sind in der Regel einen $C_6$- bis $C_{18}$-Alkyl-, - Alkylaryl- oder heterocyclischen Rest aufweisende primäre, sekundäre, tertiäre oder quartäre Ammoniumsalze, Alkanolammoniumsalze, Pyridiniumsalze, Imidazoliniumsalze, Oxazoliniumsalze, Morpholiniumsalze, Thiazoliniumsalze sowie Salze von Aminoxiden, Chinoliniumsalze, Isochinoliniumsalze, Tropyliumsalze, Sulfoniumsalze und Phosphoniumsalze. Beispielhaft genannt seien Dodecylammoniumacetat oder das entsprechende Sulfat, die Sulfate oder Acetate der verschiedenen 2-(N,N,N-Trimethylammonium)ethylparaffinsäureester, N-Cetylpyridiniumsulfat, N-Laurylpyridiniumsulfat sowie N-Cetyl-N,N,N-trimethylammoniumsulfat, N-Dodecyl-N,N,N-trimethylammoniumsulfat, N-Octyl-N,N,N-trimethlyammoniumsulfat, N,N-Distearyl-N,N-dimethylammoniumsulfat sowie das Gemini-Tensid N,N'-(Lauryldimethyl)ethylendiamindisulfat, ethoxyliertes Talgfettalkyl-N-methylammoniumsulfat und ethoxyliertes Oleylamin (beispielsweise Uniperol® AC der Fa. BASF AG, ca. 12 Ethylenoxideinheiten). Zahlreiche weitere Beispiele finden sich in H. Stache, Tensid-Taschenbuch, Carl-Hanser-Verlag, München, Wien, 1981 und in McCutcheon's, Emulsifiers & Detergents, MC Publishing Company, Glen Rock, 1989. Günstig ist, wenn die anionischen Gegengruppen möglichst gering nucleophil sind, wie beispielsweise Perchlorat, Sulfat, Phosphat, Nitrat und Carboxylate, wie beispielsweise Acetat, Trifluoracetat, Trichloracetat, Propionat, Oxalat, Citrat, Benzoat, sowie konjugierte Anionen von Organosulfonsäuren, wie zum Beispiel Methylsulfonat, Trifluormethylsulfonat und para-Toluolsulfonat, weiterhin Tetrafluoroborat, Tetraphenylborat, Tetrakis(pentafluorophenyl)borat, Tetrakis[bis(3,5-trifluormethyl)phenyl]borat, Hexafluorophosphat, Hexafluoroarsenat oder Hexafluoroantimonat.

Die als Dispergiermittel bevorzugt eingesetzten Emulgatoren werden vorteilhaft in einer Gesamtmenge $\geq 0{,}005$ und $\leq 10$ Gew.-%, vorzugsweise $\geq 0{,}01$ und $\leq 5$ Gew.-%, insbesondere $\geq 0{,}1$ und $\leq 3$ Gew.-%, jeweils bezogen auf die Monomerengesamtmenge, eingesetzt.

Die Gesamtmenge der als Dispergiermittel zusätzlich oder statt der Emulgatoren eingesetzten Schutzkolloide beträgt oft $\geq 0{,}1$ und $\leq 10$ Gew.-% und häufig $\geq 0{,}2$ und $\leq 7$ Gew.-%, jeweils bezogen die Monomerengesamtmenge.

Bevorzugt werden jedoch anionische und/oder nichtionische Emulgatoren und insbesondere bevorzugt anionische Emulgatoren als Dispergiermittel eingesetzt.

Die Auslösung der radikalisch initiierten wässrigen Emulsionspolymerisation erfolgt mittels eines radikalischen Polymerisationsinitiators (Radikalinitiator). Es kann sich dabei prinzipiell sowohl um Peroxide als auch um Azoverbindungen handeln. Selbstverständlich kommen auch Redoxinitiatorsysteme in Betracht. Als Peroxide können prinzipiell

anorganische Peroxide, wie Wasserstoffperoxid oder Peroxodisulfate, wie die Mono- oder Di-Alkalimetall- oder Ammoniumsalze der Peroxodischwefelsäure, wie beispielsweise deren Mono- und Di-Natrium-, -Kalium- oder Ammoniumsalze oder organische Peroxide, wie Alkylhydroperoxide, beispielsweise tert.-Butyl-, p-Mentyl- oder Cumylhydroperoxid, sowie Dialkyl- oder Diarylperoxide, wie Di-tert.-Butyl- oder DiCumylperoxid eingesetzt werden. Als Azoverbindung finden im wesentlichen 2,2'-Azobis(isobutyronitril), 2,2'-Azobis(2,4-dimethylvaleronitril) und 2,2'-Azobis(amidinopropyl)dihydrochlorid (AIBA, entspricht V-50 von Wako Chemicals) Verwendung. Als Oxidationsmittel für Redoxinitiatorsysteme kommen im wesentlichen die oben genannten Peroxide in Betracht. Als entsprechende Reduktionsmittel können Schwefelverbindungen mit niedriger Oxidationsstufe, wie Alkalisulfite, beispielsweise Kalium- und/oder Natriumsulfit, Alkalihydrogensulfite, beispielsweise Kalium- und/oder Natriumhydrogensulfit, Alkalimetabisulfite, beispielsweise Kalium- und/oder Natriummetabisulfit, Formaldehydsulfoxylate, beispielsweise Kalium- und/oder Natriumformaldehydsulfoxylat, Alkalisalze, speziell Kalium- und/oder Natriumsalze aliphatische Sulfinsäuren und Alkalimetallhydrogensulfide, wie beispielsweise Kalium- und/oder Natriumhydrogensulfid, Salze mehrwertiger Metalle, wie Eisen-(II)-sulfat, Eisen-(II)-Ammoniumsulfat, Eisen-(II)-phosphat, Endiole, wie Dihydroxymaleinsäure, Benzoin und/oder Ascorbinsäure sowie reduzierende Saccharide, wie Sorbose, Glucose, Fructose und/oder Dihydroxyaceton eingesetzt werden. In der Regel beträgt die Menge des eingesetzten Radikalinitiators, bezogen auf die Monomerengesamtmenge, 0,01 bis 5 Gew.-%, bevorzugt 0,1 bis 3 Gew.-% und insbesondere bevorzugt 0,2 bis 1,5 Gew.-%.

Erfindungsgemäß kann die Gesamtmenge des Radikalinitiators im wässrigen Reaktionsmedium vor Initiierung der Polymerisationsreaktion vorgelegt werden. Es ist aber auch möglich, gegebenenfalls lediglich eine Teilmenge des Radikalinitiators im wässrigen Reaktionsmedium vor Initiierung der Polymerisationsreaktion vorzulegen und dann unter Polymerisationsbedingungen während der erfindungsgemäßen radikalischen Emulsionspolymerisation die Gesamtmenge bzw. die gegebenenfalls verbliebene Restmenge nach Maßgabe des Verbrauchs kontinuierlich oder diskontinuierlich zuzugeben.

Unter Initiierung der Polymerisationsreaktion wird der Start der Polymerisationsreaktion der im Polymerisationsgefäß vorliegenden Monomeren nach Radikalbildung des Radikalinitiators verstanden. Dabei kann die Initiierung der Polymerisationsreaktion durch Zugabe von Radikalinitiator zum wässrigen Polymerisationsgemisch im Polymerisationsgefäß unter Polymerisationsbedingungen erfolgen. Es ist aber auch möglich, dass eine Teil- oder die Gesamtmenge des Radikalinitiators dem die vorgelegten Monomeren enthaltenden wässrigen Polymerisationsgemisch im Polymerisationsgefäß unter Bedingungen, welche nicht geeignet sind, eine Polymerisationsreaktion auszulösen, beispielsweise bei tiefer Temperatur, zugegeben werden und danach im wässrigen Polymerisationsgemisch Polymerisationsbedingungen eingestellt werden. Unter Polymerisationsbedingungen sind dabei generell diejenigen Temperaturen und Drücke zu verstehen, unter denen die radikalisch initiierte wässrige Emulsionspolymerisation mit ausreichender Polymerisationsgeschwindigkeit verläuft. Sie sind insbesondere abhängig vom verwendeten Radikalinitiator. Vorteilhaft werden Art und Menge des Radikalinitiators, Polymerisationstemperatur und Polymerisationsdruck so ausgewählt, dass der Radikalinitiator eine Halbwertsze it ≤ 3 Stunden, insbesondere vorteilhaft ≤ 1 Stunde und ganz besonders vorteilhaft ≤ 30 Minuten aufweist und dabei immer genügend Startradikale zur Verfügung stehen, um die Polymerisationsreaktion zu initiieren bzw. aufrechtzuerhalten.

Als Reaktionstemperatur für die erfindungsgemäße radikalische wässrige Emulsionspolymerisation kommt der gesamte Bereich von 0 bis 170 °C in Betracht. Dabei werden in der Regel Temperaturen von 50 bis 120 °C, häufig 60 bis 110 °C und oft 70 bis 100 °C angewendet. Die erfindungsgemäße radikalische wässrige Emulsionspolymerisation kann bei einem Druck kleiner, gleich oder größer 1 bar (absolut) durchgeführt werden, so dass die Polymerisationstemperatur 100 °C übersteigen und bis zu 170 °C betragen kann. Vorzugsweise werden leichtflüchtige Monomere, wie beispielsweise 2-Methylbuten-1, 3-Methylbuten-1, 2-Methylbuten-2, Butadien oder Vinylchlorid unter erhöhtem Druck polymerisiert. Dabei kann der Druck 1,2, 1,5, 2, 5, 10, 15 bar oder noch höhere Werte einnehmen. Werden Emulsionspolymerisationen im Unterdruck durchgeführt, werden Drücke von 950 mbar, häufig von 900 mbar und oft 850 mbar (absolut) eingestellt. Vorteilhaft wird die erfindungsgemäße radikalische wässrige E-muslionspolymerisation bei 1 atm (1,013 bar absolut) unter Inertgasatmosphäre, wie beispielsweise unter Stickstoff oder Argon durchgeführt.

Das wässrige Reaktionsmedium kann prinzipiell auch wasserlösliche organische Lösungsmittel, wie beispielsweise Methanol, Ethanol, Isopropanol, Butanole, Pentanole, aber auch Aceton etc. umfassen. Bevorzugt wird das erfindungsgemäße Verfahren jedoch in Abwesenheit solcher Lösungsmittel durchgeführt.

Neben den vorgenannten Komponenten können im erfindungsgemäßen Verfahren optional auch radikalkettenübertragende Verbindungen eingesetzt werden, um das Molekulargewicht der durch die Polymerisation zugänglichen Polymerisate zu reduzieren bzw. zu kontrollieren. Dabei kommen im wesentlichen aliphatische und/oder araliphatische Halogenverbindungen, wie beispielsweise n-Butylchlorid, n-Butylbromid, n-Butyljodid, Methylenchlorid, Ethylendichlorid, Chloroform, Bromoform, Bromtrichlormethan, Dibromdichlormethan, Tetrachlorkohlenstoff, Tetrabromkohlenstoff, Benzylch-Iorid, Benzylbromid, organische Thioverbindungen, wie primäre, sekundäre oder tertiäre aliphatische Thiole, wie beispielsweise Ethanthiol, n-Propanthiol, 2-Propanthiol, n-Butanthiol, 2-Butanthiol, 2-Methyl-2-propanthiol, n-Pentanthiol, 2-Pentanthiol, 3-Pentanthiol, 2-Methyl-2-butanthiol, 3-Methyl-2-butanthiol, n-Hexanthiol, 2-Hexanthiol, 3-Hexanthiol, 2-Methyl-2-pentanthiol, 3-Methyl-2-pentanthiol, 4-Methyl-2-pentanthiol, 2-Methyl-3-pentanthiol, 3-Methyl-3-pentanthiol,

2-Ethylbutanthiol, 2-Ethyl-2-butanthiol, n-Heptanthiol und seine isomeren Verbindungen, n-Octanthiol und seine isomeren Verbindungen, n-Nonanthiol und seine isomeren Verbindungen, n-Decanthiol und seine isomeren Verbindungen, n-Undecanthiol und seine isomeren Verbindungen, n-Dodecanthiol und seine isomeren Verbindungen, n-Tridecanthiol und seine isomeren Verbindungen, substituierte Thiole, wie beispielsweise 2-Hydroxyethanthiol, aromatische Thiole, wie Benzolthiol, ortho-, meta-, oder para-Methylbenzolthiol, sowie alle weiteren im Polymerhandbook 3rd edtition, 1989, J. Brandrup und E.H. Immergut, John Weley & Sons, Abschnitt II Seiten 133 bis 141, beschriebenen Schwefelverbindungen, aber auch aliphatische und/oder aromatische Aldehyde, wie Acetaldeyhd, Propionaldehyd und/oder Benzaldehyd, ungesättigte Fettsäuren, wie Ölsäure, Diene mit nicht konjugierten Doppelbindungen, wie Divinylmethan oder Vinylcyclohexan oder Kohlenwasserstoffe mit leicht abstrahierbaren Wasserstoffatomen, wie beispielsweise Toluol, zum Einsatz. Es ist aber auch möglich, Gemische sich nicht störender vorgenannter radikalkettenübertragender Verbindungen einzusetzen.

Die im erfindungsgemäßen Verfahren optional eingesetzte Gesamtmenge der radikalkettenübertragenden Verbindungen, bezogen auf die Monomerengesamtmenge, ist in der Regel ≤ 5 Gew.-%, oft ≤ 3 Gew.-% und häufig ≤ 1 Gew.-%.

Günstig ist es, wenn eine Teil- oder die Gesamtmenge der optional eingesetzten radikalkettenübertragenden Verbindung dem Reaktionsmedium vor der Initiierung der radikalischen Polymerisation zugeführt wird. Darüber hinaus kann eine Teil- oder die Gesamtmenge die radikalkettenübertragende Verbindung dem wässrigen Reaktionsmedium vorteilhaft auch gemeinsam mit den Monomeren B bis D während der Polymerisation zugeführt werden.

Die nach dem erfindungsgemäßen Verfahren zugänglichen Polymerisate können prinzipiell Glasübergangstemperaturen im Bereich von -70 bis +150 °C, oft -30 bis +100 °C und häufig -20 bis +50°C aufweisen. Sollen die wässrigen Polymerisatdispersion zur Herstellung von Klebstoffen, insbesondere Haftklebstoffen eingesetzt werden, so werden die Monomeren A bis D so gewählt, dass das erhaltene Polymerisat eine Glasübergangstemperatur $T_g \leq +20$ °C aufweist. Häufig werden die Monomeren A bis D so gewählt, dass Polymerisate mit einem $T_g$-Wert ≤ +10 °C, ≤ 0 °C, ≤ -10 °C, ≤ -20 °C, ≤ -30 °C, ≤ -40 °C oder ≤ -50 °C gebildet werden. Es können aber auch Polymerisate hergestellt werden, deren Glasübergangstemperaturen zwischen -70 und +10 °C, zwischen -60 und -10 °C oder zwischen -50 und -20 °C liegen. Unter Glasübergangstemperatur wird hier die midpoint temperature nach ASTM D 3418-82 verstanden, ermittelt durch Differentialthermoanalyse (DSC) [vgl. auch Ullmann's Encyclopedia of Industrial Chemistry, Seite 169, Verlag Chemie, Weinheim, 1992 und Zosel in Farbe und Lack, 82, Seiten 125 bis 134, 1976].

Nach Fox (T.G. Fox, Bull. Am. Phys. Soc. 1956 [Ser. II] 1, Seite 123 und gemäß Ullmann's Encyclopädie der technischen Chemie, Bd. 19, Seite 18, 4. Auflage, Verlag Chemie, Weinheim, 1980) gilt für die Glasübergangstemperatur von höchstens schwach vernetzten Mischpolymerisaten in guter Näherung:

$$1/T_g = x^1/T_g^1 + x^2/T_g^2 + \ldots. x^n/T_g^n,$$

wobei $x^1$, $x^2$, .... $x^n$ die Massenbrüche der Monomeren 1, 2, .... n und $T_g^1$, $T_g^2$, .... $T_g^n$ die Glasübergangstemperaturen der jeweils nur aus einem der Monomeren 1, 2, .... n aufgebauten Polymerisaten in Grad Kelvin bedeuten. Die Glasübergangstemperaturen dieser Homopolymerisate der meisten ethylenisch ungesättigten Monomere sind bekannt (bzw. können in einfacher an sich bekannter Weise experimentell ermittelt werden) und beispielsweise in J. Brandrup, E.H. Immergut, Polymer Handbook 1st Ed. J. Wiley, New York, 1966, 2nd Ed. J. Wiley, New York, 1975 und 3rd Ed. J. Wiley, New York, 1989, sowie in Ullmann's Cncyclopedia of Industrial Chemistry, Seite 169, Verlag Chemie, Weinheim, 1992, aufgeführt.

Optional kann die radikalisch initiierte wässrige Emulsionspolymerisation auch in Anwesenheit einer Polymersaat, beispielsweise in Anwesenheit von 0,01 bis 3 Gew.-%, häufig von 0,02 bis 2 Gew.-% und oft von 0,04 bis 1,5 Gew.-% einer Polymersaat, jeweils bezogen auf die Monomerengesamtmenge, erfolgen.

Eine Polymersaat wird insbesondere dann eingesetzt, wenn die Teilchengröße der mittels radikalisch wässriger Emulsionspolymerisation herzustellender Polymerpartikel gezielt eingestellt werden soll (siehe hierzu beispielsweise US-A 2520959 und US-A 3397165).

Insbesondere wird eine Polymersaat eingesetzt, deren Polymersaatpartikel eine enge Teilchengrößenverteilung und gewichtsmittlere Durchmesser $D_w \leq 100$ nm, häufig ≥ 5 nm bis ≤ 50 nm und oft ≥ 15 nm bis ≤ 35 nm aufweisen. Die Bestimmung der gewichtsmittleren Teilchendurchmesser ist dem Fachmann bekannt und erfolgt beispielsweise über die Methode der Analytischen Ultrazentrifuge. Unter gewichtsmittlerem Teilchendurchmesser wird in dieser Schrift der nach der Methode der Analytischen Ultrazentrifuge ermittelte gewichtsmittlere $D_{w50}$-Wert verstanden (vgl. hierzu S.E. Harding et al., Analytical Ultracentrifugation in Biochemistry and Polymer Science, Royal Society of Chemistry, Cambridge, Great Britain 1992, Chapter 10, Analysis of Polymer Dispersions with an Eight-Cell-AUC-Multiplexer: High Resolution Particle Size Distribution and Density Gradient Techniques, W. Mächtle, Seiten 147 bis 175).

Unter enger Teilchengrößenverteilung soll im Rahmen dieser Schrift verstanden werden, wenn das Verhältnis

der nach der Methode der Analytischen Ultrazentrifuge ermittelten gewichtsmittleren Teilchendurchmesser $D_{w50}$ und zahlenmittleren Teilchendurchmesser $D_{N50}$ [$D_{w50}$/$D_{N50}$] ≤ 2,0, bevorzugt ≤ 1,5 und insbesondere bevorzugt ≤ 1,2 oder ≤ 1,1 ist.

Üblicherweise wird die Polymersaat in Form einer wässrigen Polymerisatdispersion eingesetzt. Die vorgenannten Mengenangaben beziehen sich dabei auf den Polymerisatfeststoffanteil der wässrigen Polymersaatdispersion; sie sind daher als Gew.-Teile Polymersaatfeststoff, bezogen auf die Monomerengesamtmenge, angegeben.

Wird eine Polymersaat verwendet, so wird vorteilhaft eine Fremdpolymersaat eingesetzt. Im Unterschied zu einer sogenannten in situ-Polymersaat, welche vor Beginn der eigentlichen Emulsionspolymerisation im Reaktionsgefäß hergestellt wird und welche die gleiche monomere Zusammensetzung aufweist wie das durch die nachfolgende radikalisch initiierte wässrige Emulsionspolymerisation hergestellte Polymerisat, wird unter einer Fremdpolymersaat eine Polymersaat verstanden, die in einem separaten Reaktionsschritt hergestellt wurde und deren monomere Zusammensetzung von dem durch die radikalisch initiierte wässrige Emulsionspolymerisation hergestellten Polymerisat verschieden ist, was jedoch nichts anderes bedeutet, als dass zur Herstellung der Fremdpolymersaat und zur Herstellung der wässrigen Polymerisatdispersion unterschiedliche Monomere bzw. Monomerenmischungen mit unterschiedlicher Zusammensetzung eingesetzt werden. Die Herstellung einer Fremdpolymersaat ist dem Fachmann geläufig und erfolgt üblicherweise dergestalt, dass eine relativ kleine Menge an Monomeren sowie eine relativ große Menge an Emulgatoren in einem Reaktionsgefäß vorgelegt und bei Reaktionstemperatur eine ausreichende Menge an Polymerisationsinitiator zugegeben wird.

Erfindungsgemäß bevorzugt wird eine Polymerfremdsaat mit einer Glasübergangstemperatur ≥ 50 °C, häufig ≥ 60 °C oder ≥ 70 °C und oft ≥ 80 °C oder ≥ 90 °C eingesetzt. Insbesondere bevorzugt ist eine Polystyrol- oder eine Polymethylmethacrylat-Polymersaat.

Die Gesamtmenge an Fremdpolymersaat kann gemeinsam mit den Monomeren A im Polymerisationsgefäß vorgelegt werden. Es ist aber auch möglich, lediglich eine Teilmenge der Fremdpolymersaat mit den Monomeren A im Polymerisationsgefäß vorzulegen und die verbleibende Restmenge während der Polymerisation gemeinsam mit den Monomeren B bis D zuzugeben. Falls erforderlich, kann aber auch die Gesamtpolymersaatmenge im Verlauf der Polymerisation zuzugeben werden. Vorzugsweise wird die Gesamtmenge an Fremdpolymersaat vor Initiierung der Polymerisationsreaktion im Polymerisationsgefäß vorgelegt.

Die erfindungsgemäß zugänglichen wässrigen Polymerisatdispersionen weisen üblicherweise einen Polymerisatfeststoffgehalt von ≥ 10 und ≤ 70 Gew.-%, häufig ≥ 20 und ≤ 65 Gew.-% und oft ≥ 25 und ≤ 60 Gew.-%, jeweils bezogen auf die wässrige Polymerisatdispersion, auf. Der über quasielastische Lichtstreuung (ISO-Norm 13 321) ermittelte zahlenmittlere Teilchendurchmesser (cumulant z-average) liegt in der Regel zwischen 10 und 2000 nm, häufig zwischen 20 und 1000 nm und oft zwischen 100 und 700 nm bzw. 100 bis 400 nm.

Häufig werden bei den erhaltenen wässrigen Polymerisatdispersionen die Restgehalte an nicht umgesetzten Monomeren sowie anderen leichtsiedenden Verbindungen durch dem Fachmann ebenfalls bekannte chemische und/oder physikalische Methoden [siehe beispielsweise EP-A 771328, DE-A 19624299, DE-A 19621027, DE-A 19741184, DE-A 19741187, DE-A 19805122, DE-A 19828183, DE-A 19839199, DE-A 19840586 und 19847115] herabgesetzt.

Die nach dem erfindungsgemäßen Verfahren zugänglichen wässrigen Polymerisatdispersionen weisen einen deutlich höheren Monomerenumsatz bei gleicher Polymerisationszeit, bzw. einen höheren Polymerisatfeststoffgehalt nach abgeschlossener Polymerisationsreaktion auf.

Die nach dem erfindungsgemäßen Verfahren zugänglichen wässrigen Polymerisatdispersionen können insbesondere zur Herstellung von Klebstoffen, Dichtmassen, Kunststoffputzen, Papierstreichmassen, Faservliesen, Anstrichmitteln und Beschichtungsmitteln für organische Substrate, wie beispielsweise Leder oder textile Stoffe, sowie zur Modifizierung von mineralischen Bindemitteln eingesetzt werden.

Bei der Verwendung als Klebstoff, insbesondere als Haftklebstoff, wird den nach dem erfindungsgemäßen Verfahren zugänglichen wässrigen Polymerisatdispersionen vorzugsweise ein Tackifier, d.h. ein klebrigmachendes Harz zugesetzt. Tackifier sind beispielsweise aus Adhäsive Age, Juli 1987, Seiten 19 bis 23 oder Polym. Mater. Sci. Eng. 61 (1989), Seiten 588 bis 592, bekannt.

Tackifier sind z.B. Naturharze, wie Kolophoniumharze und deren durch Disproportionierung oder Isomerisierung, Polymerisation, Dimerisation oder Hydrierung entstehenden Derivate. Diese können in ihrer Salzform (mit z.B. ein- oder mehrwertigen Gegenionen [Kationen]) oder bevorzugt in ihrer veresterten Form vorliegen. Alkohole, die zur Veresterung verwendet werden, können ein- oder mehrwertig sein. Beispiele sind Methanol, E-thandiol, Diethylenglykol, Triethylenglykol, 1,2,3-Propantriol (Glyzerin) oder Pentaerythrit.

Desweiteren finden auch Kohlenwasserstoffharze, z.B. Cumaron-Inden-Harze, Polyterpen-Harze, Kohlenwasserstoffharze auf Basis ungesättigter CH-Verbindungen, wie Butadien, Penten, Methylbuten, Isopren, Piperylen, Divinylmethan, Pentadien, Cyclopenten, Cyclopentadien, Cyclohexadien, Styrol, α-Methylstyrol oder Vinyltoluole Verwendung.

Als Tackifier werden zunehmend auch Polyacrylate, welche ein niedriges Molekulargewicht aufweisen, verwendet. Vorzugsweise haben diese Polyacrylate ein gewichtsmittleres Molekulargewicht unter 30.000 g/mol. Die Polyacrylate bestehen bevorzugt zu mindestens 60, insbesondere mindestens 80 Gew.-% aus $C_1$-$C_8$-Alkylacrylaten oder -methacrylaten.

Bevorzugte Tackifier sind natürliche oder chemisch modifizierte Kolophoniumharze. Kolophoniumharze bestehen zum überwiegenden Teil aus Abietinsäure oder Abietinsäurederivaten.

Die Tackfier können in einfacher Weise den erfindungsgemäß zugänglichen wässrigen Polymerisatdispersionen zugesetzt werden. Vorzugsweise liegen die Tackifier dabei selbst in Form einer wässrigen Dispersion vor. Die Menge der Tackifier beträgt vorzugsweise 5 bis 100 Gew.-%, besonders 10 bis 50 Gew.-%, jeweils bezogen auf die Gesamtmenge des Polymerisats (fest/fest).

Neben Tackifiern können selbstverständlich auch noch andere übliche Additive, beispielsweise Verdickungsmittel, Entschäumer, Weichmacher, Pigmente, Netzmittel oder Füllstoffe bei der Formulierung von Haftklebstoffen Verwendung finden.

Die wässrigen Polymerisatdispersionen können durch übliche Methoden, beispielsweise durch Rollen, Rakeln, Streichen etc. auf Substrate, wie beispielsweise Papier oder Polymerbänder und -folien, bevorzugt bestehend aus Polyethylen, Polypropylen, das biaxial oder monoaxial verstreckt sein kann, Polyethylenterephthalat, Polyvinylchlorid, Polystyrol, Polyamid oder Metalloberflächen aufgebracht werden. Das Wasser kann in einfacher Weise durch Trocknung bei 50 bis 150 °C entfernt werden. Zur späteren Verwendung kann die mit Haftklebstoff beschichtete Seite der Substrate, beispielsweise der Etiketten oder Bänder, mit einem Releasepapier, beispielsweise mit einem silikonisierten Papier, abgedeckt werden.

Die nach dem erfindungsgemäßen Verfahren zugänglichen wässrigen Polymerisatdispersionen eignen sich vorteilhaft als Komponente in Klebstoffen, insbesondere Haftklebstoffen. Dabei weisen diese erfindungsgemäßen Klebstoffe vorteilhaft eine verbesserte Adhäsion auf Kunststoffoberflächen, insbesondere Polyethylenoberflächen auf.

Folgende nicht einschränkende Beispiele sollen die Erfindung erläutern.

Beispiel

In einem 4 1-Vierhalskolben, ausgerüstet mit einem Anker-Rührer, Rückflußkühler und zwei Dosiereinrichtungen wurden bei 20 bis 25 °C (Raumtemperatur) und unter Stickstoffatmosphäre 970 g entionisiertes Wasser, 42,4 g einer wässrigen Polystyrolsaat (Feststoffgehalt 33 Gew.-%, zahlenmittlerer Teilchendurchmesser 32 nm), 212 g Octen-1, 12,3 g einer 40 gew.-%igen wässrigen Lösung von Emulgator K30® der Fa. Lanxess, Leverkusen (Mischung aus primären und sekundären Natriumalkylsulfonaten mit einer durchschnittlichen Kettenlänge von 15 Kohlenstoffatomen) und 1,5 g Natriumpersulfat vorgelegt und unter Rühren auf 90 °C aufgeheizt. Nachdem die Temperatur erreicht war, wurde der Monomerzulauf, bestehend aus 600 g entionisiertem Wasser, 12,3 g einer 40 gew.-%igen wässrigen Lösung von Emulgator K30®, 11,2 g einer 25 gew.-%igen wässrigen Lösung von Natriumhydroxid, 1184 g n-Butylacrylat und 5,6 g Allylmethacrylat und der Initiatorzulauf, bestehend aus 110 g entionisiertem Wasser und 8,3 g Natriumpersulfat, gleichzeitig gestartet, wobei der Monomerzulauf innerhalb von 3 Stunden und der Initiatorzulauf innerhalb von 3,5 Stunden kontinuierlich zudosiert wurde. Anschließend ließ man die erhaltene wässrige Polymerisatdispersion noch 2 Stunde bei 90 °C nachreagieren und kühlte diese dann auf Raumtemperatur ab. Die erhaltene wässrige Polymerisatdispersion wies einen Feststoffgehalt von 45 Gew.-%, bezogen auf das Gesamtgewicht der wässrigen Polymerisatdispersion, auf. Die Glasübergangstemperatur des Polymerisats betrug -47 °C.

Die Feststoffgehalt wurde bestimmt, indem eine definierte Menge der wässrigen Polymerisatdispersion (ca. 5 g) bei 140 °C in einem Trockenschrank bis zur Gewichtskonstanz getrocknet wurde. Es wurden zwei separate Messungen durchgeführt. Der im Beispiel angegebene Wert stellt den Mittelwert der beiden Messergebnisse dar.

Die Bestimmung der Glasübergangstemperatur erfolgte gemäß DIN 53765 mittels eines DSC 820-Geräts, Serie TA 8000 der Fa. Mettler-Toledo.

Vergleichsbeispiel

Die Durchführung des Vergleichsbeispiels erfolgte analog dem erfindungsgemäßen Beispiel, jedoch mit dem Unterschied, dass die Gesamtmenge von 212 g an Octen-1 gemeinsam mit dem Monomerzulauf zudosiert wurde. Die erhaltene wässrige Polymerisatdispersion wies einen Feststoffgehalt von 40 Gew.-%, bezogen auf das Gesamtgewicht der wässrigen Polymerisatdispersion, auf. Die Glasübergangstemperatur des Polymerisats betrug -44 °C.

## Patentansprüche

1. Verfahren zur Herstellung einer wässrigen Polymerisatdispersion durch radikalisch initiierte wässrige Emulsionspolymerisation von ethylenisch ungesättigten Monomeren in Anwesenheit wenigstens eines Dispergiermittels und wenigstens eines Radikalinitiators, wobei zur Emulsionspolymerisation

| | |
|---|---|
| 1 bis 50 Gew.-% | eines 5 bis 12 C-Atome aufweisenden Alkens [Monomer A], und |
| 50 bis 99 Gew.-% | eines Esters auf Basis einer 3 bis 6 C-Atome aufweisenden α,β-monoethylenisch ungesättigten Mono- oder Dicarbonsäure und eines 1 bis 12 C-Atome aufweisenden Alkanols [Monomer B], sowie gegebenenfalls |
| 0 bis 10 Gew.-% | einer 3 bis 6 C-Atome aufweisenden α,β-monoethylenisch ungesättigten Mono- oder Dicarbonsäure und/oder deren Amid [Monomer C] und |
| 0 bis 30 Gew.-% | einer sich von den Monomeren A bis C unterscheidenden α,β-ethylenisch ungesättigten Verbindung [Monomer D], |

eingesetzt werden und sich die Monomeren A bis D zu 100 Gew.-% addieren, **dadurch gekennzeichnet, dass** wenigstens 50 Gew.-% der Gesamtmenge an Monomeren A und optional bis zu jeweils 10 Gew.-% der Gesamtmengen an Monomeren B bis D im Polymerisationsgefäß vor Initiierung der Polymerisationsreaktion vorgelegt werden und die gegebenenfalls verbliebene Restmenge an Monomeren A und die Gesamtmengen bzw. die gegebenenfalls verbliebenen Restmengen der Monomeren B bis D dem Polymerisationsgefäß unter Polymerisationsbedingungen zugeführt werden.

**2.** Verfahren nach Anspruch 1, **dadurch gekennzeichnet, dass**

| | |
|---|---|
| 1 bis 49,99 Gew.-% | Monomer A, und |
| 50 bis 98,99 Gew.-% | Monomer B, sowie |
| 0,01 bis 10 Gew.-% | Monomer C |

eingesetzt werden.

**3.** Verfahren nach einem der Ansprüche 1 und 2, **dadurch gekennzeichnet, dass** als Monomer A ein 1-Alken eingesetzt wird.

**4.** Verfahren nach einem der Ansprüche 1 bis 3, **dadurch gekennzeichnet, dass** als Monomer B ein Ester auf Basis einer 3 oder 4 C-Atome aufweisenden α,β-monoethylenisch ungesättigten Mono- oder Dicarbonsäure und eines 1 bis 8 C-Atome aufweisenden Alkanols eingesetzt wird.

**5.** Verfahren nach einem der Ansprüche 1 bis 4, **dadurch gekennzeichnet, dass** als Monomer A ein 6 bis 8 C-Atome aufweisendes Alken eingesetzt wird.

**6.** Verfahren nach einem der Ansprüche 1 bis 5, **dadurch gekennzeichnet, dass** wenigstens 80 Gew.-% der Gesamtmenge an Monomeren A vor Initiierung der Polymerisationsreaktion im Polymerisationsgefäß vorgelegt werden.

**7.** Verfahren nach einem der Ansprüche 1 bis 6, **dadurch gekennzeichnet, dass** die Gesamtmenge an Monomeren A vor Initiierung der Polymerisationsreaktion im Polymerisationsgefäß vorgelegt werden.

**8.** Verfahren nach einem der Ansprüche 1 bis 7, **dadurch gekennzeichnet, dass** die Gesamtmengen bzw. die gegebenenfalls verbliebenen Restmengen der Monomeren B bis D dem Polymerisationsgefäß unter Polymerisationsbedingungen kontinuierlich mit gleichbleibenden Mengenströmen zudosiert werden.

**9.** Verfahren nach einem der Ansprüche 1 bis 8, **dadurch gekennzeichnet, dass** die Gesamtmengen bzw. die gegebenenfalls verbliebenen Restmengen der Monomeren B bis D dem Polymerisationsgefäß unter Polymerisationsbedingungen als Monomerengemisch zudosiert werden.

**10.** Verfahren nach Anspruch 9, **dadurch gekennzeichnet, dass** die Gesamtmengen bzw. die gegebenenfalls verbliebenen Restmengen der Monomeren B bis D dem Polymerisationsgefäß in Form einer wässrigen Monomerenemulsion zudosiert werden.

## Claims

1. A process for preparing an aqueous polymer dispersion by free-radically initiated aqueous emulsion polymerization of ethylenically unsaturated monomers in the presence of at least one dispersant and at least one free-radical initiator, using

| | |
|---|---|
| 1 to 50% | by weight of an alkene of 5 to 12 carbon atoms [monomer A] and |
| 50 to 99% | by weight of an ester based on an α,β-monoethylenically unsaturated monocarboxylic or dicarboxylic acid of 3 to 6 carbon atoms and an alkanol of 1 to 12 carbon atoms [monomer B], and also, if appropriate, |
| 0 to 10% | by weight of an α,β-monoethylenically unsaturated monocarboxylic or dicarboxylic acid of 3 to 6 carbon atoms and/or amide thereof [monomer C] and |
| 0 to 30% | by weight of an α,β-ethylenically unsaturated compound [monomer D] different than monomers A to C |

for the emulsion polymerization, monomers A to D adding to 100% by weight, wherein at least 50% by weight of the total amount of monomers A and optionally up to 10% by weight each of the total amounts of monomers B to D are included in the initial charge to the polymerization vessel before the polymerization reaction is initiated, and any remainder of monomers A, and the total amounts or, if appropriate, the remainders of monomers B to D are supplied to the polymerization vessel under polymerization conditions.

2. The process according to claim 1, wherein

| | |
|---|---|
| 1 to 49.99% | by weight of monomer A, |
| 50 to 98.99% | by weight of monomer B, and |
| 0.01 to 10% | by weight of monomer C |

are used.

3. The process according to either of claims 1 and 2, wherein a 1-alkene is used as monomer A.

4. The process according to any one of claims 1 to 3, wherein an ester based on an α,β-monoethylenically unsaturated monocarboxylic or dicarboxylic acid of 3 or 4 carbon atoms and an alkanol of 1 to 8 carbon atoms is used as monomer B.

5. The process according to any one of claims 1 to 4, wherein an alkene of 6 to 8 carbon atoms is used as monomer A.

6. The process according to any one of claims 1 to 5, wherein at least 80% by weight of the total amount of monomers A are included in the initial charge to the polymerization vessel before the polymerization reaction is initiated.

7. The process according to any one of claims 1 to 6, wherein the total amount of monomers A is included in the initial charge to the polymerization vessel before the polymerization reaction is initiated.

8. The process according to any one of claims 1 to 7, wherein the total amounts or, if appropriate, the remainders of monomers B to D are metered continuously at constant flow rates to the polymerization vessel under polymerization conditions.

9. The process according to any one of claims 1 to 8, wherein the total amounts or, if appropriate, the remainders of monomers B to D are metered into the polymerization vessel as a monomer mixture under polymerization conditions.

10. The process according to claim 9, wherein the total amounts or, if appropriate, the remainders of monomers B to D are metered into the polymerization vessel in the form of an aqueous monomer emulsion.

## Revendications

1. Procédé pour la préparation d'une dispersion aqueuse d'un polymère par une polymérisation en émulsion aqueuse initiée par voie radicalaire de monomères éthyléniquement insaturés en présence d'au moins un dispersant et d'au

moins un initiateur de radicaux, où, pour la polymérisation en émulsion, on utilise

| | |
|---|---|
| 1 à 50% en poids | d'un alcène présentant 5 à 12 atomes de carbone [monomère A], et |
| 50 à 99% en poids | en poids d'un ester à base d'un acide monocarboxylique ou dicarboxylique éthyléniquement $\alpha,\beta$-monoinsaturé présentant 3 à 6 atomes de carbone et d'un alcanol présentant 1 à 12 atomes de carbone [monomère B], ainsi que, le cas échéant |
| 0 à 10% en poids | d'un acide monocarboxylique ou dicarboxylique éthyléniquement $\alpha,\beta$-monoinsaturé comprenant 3 à 6 atomes de carbone et/ou son amide [monomère C] et |
| 0 à 30% en poids | d'un composé éthyléniquement $\alpha,\beta$-monoinsaturé différent des monomères A à C [monomère D], |

et les monomères A à D forment 100% en poids au total, **caractérisé en ce qu'**on dispose au préalable au moins 50% en poids de la quantité totale de monomères A et éventuellement jusqu'à 10% en poids des quantités totales de monomères B à D dans le récipient de polymérisation avant l'initiation de la réaction de polymérisation et on ajoute la quantité résiduelle éventuelle de monomères A et les quantités totales ou les quantités résiduelles éventuelles de monomères B à D dans le récipient de polymérisation dans les conditions de polymérisation.

**2.** Procédé selon la revendication 1, **caractérisé en ce qu'**on utilise

| | |
|---|---|
| 1 à 49,99% | en poids de monomère A et |
| 50 à 98,99% | en poids de monomère B ainsi que |
| 0,01 à 10% | en poids de monomère C. |

**3.** Procédé selon l'une quelconque des revendications 1 et 2, **caractérisé en ce qu'**on utilise un 1-alcène comme monomère A.

**4.** Procédé selon l'une quelconque des revendications 1 à 3, **caractérisé en ce qu'**on utilise comme monomère B un ester à base d'un acide monocarboxylique ou dicarboxylique éthyléniquement $\alpha,\beta$-monoinsaturé présentant 3 ou 4 atomes de carbone et d'un alcanol présentant 1 à 8 atomes de carbone.

**5.** Procédé selon l'une quelconque des revendications 1 à 4, **caractérisé en ce qu'**on utilise comme monomère A un alcène présentant 6 à 8 atomes de carbone.

**6.** Procédé selon l'une quelconque des revendications 1 à 5, **caractérisé en ce qu'**on dispose au préalable au moins 80% en poids de la quantité totale de monomères A avant l'initiation de la réaction de polymérisation dans le récipient de polymérisation.

**7.** Procédé selon l'une quelconque des revendications 1 à 6, **caractérisé en ce qu'**on dispose au préalable la quantité totale de monomères A avant l'initiation de la réaction de polymérisation dans le récipient de polymérisation.

**8.** Procédé selon l'une quelconque des revendications 1 à 7, **caractérisé en ce que** les quantités totales ou les quantités résiduelles éventuelles des monomères B à D sont dosées en continu dans le récipient de polymérisation dans les conditions de polymérisation, avec des flux de quantités qui restent identiques.

**9.** Procédé selon l'une quelconque des revendications 1 à 8, **caractérisé en ce que** les quantités totales ou les quantités résiduelles éventuelles des monomères B à D sont dosées dans le récipient de polymérisation dans les conditions de polymérisation sous forme de mélange de monomères.

**10.** Procédé selon la revendication 9, **caractérisé en ce que** les quantités totales ou les quantités résiduelles éventuelles des monomères B à D sont dosées dans le récipient de polymérisation sous forme d'une émulsion aqueuse de monomères.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 03042254 A
- WO 03091297 A
- EP 1384729 A
- US 4921898 A
- US 5070134 A
- US 5110856 A
- US 5629370 A
- EP 295727 A
- EP 757065 A
- EP 1114833 A
- DE 19620817 A
- DE 1720277 A
- DE 102005035692
- DE 4003422 A
- US 4269749 A
- US 2520959 A
- US 3397165 A
- EP 771328 A
- DE 19624299 A
- DE 19621027 A
- DE 19741184 A
- DE 19741187 A
- DE 19805122 A
- DE 19828183 A
- DE 19839199 A
- DE 19840586 A
- DE 19847115 A


### In der Beschreibung aufgeführte Nicht-Patentliteratur


- **A. Sen et al.** *Journal American Chemical Society,* 2001, vol. 123, 12738-12739
- **B. Klumperman et al.** *Macromolecules,* 2004, vol. 37, 4406-4416
- **A. Sen et al.** *Journal of Polymer Science, Part A: Polymer Chemistry,* 2004, vol. 42 (24), 6175-6192
- **S.M. Samoilov.** *J. Macromol. Sci. Chem.,* 1983, vol. A19 (1), 107-122
- Encyclopedia of Polymer Science and Engineering. 1987, vol. 8, 659 ff
- **D.C. Blackley.** *High Polymer Latices,* 1966, vol. 1, 35 ff
- **H. Warson.** The Applications of Synthetic Resin Emulsions. 1972, 246 ff
- **D. Diederich.** *Chemie in unserer Zeit,* 1990, vol. 24, 135-142
- Emulsion Polymerisation. Interscience Publishers, 1965
- **F. Hölscher.** Dispersionen synthetischer Hochpolymerer. Springer-Verlag, 1969
- Methoden der organischen Chemie. **Houben-Weyl.** Makromolekulare Stoffe. Georg-Thieme-Verlag, 1961, vol. XIV/1, 411-420
- Methoden der organischen Chemie. **Houben-Weyl.** Makromolekulare Stoffe. Georg-Thieme-Verlag, 1961, vol. XIV/1, 192-208
- **H. Stache.** Tensid-Taschenbuch. Carl-Hanser-Verlag, 1981
- McCutcheon's, Emulsifiers & Detergents. MC Publishing Company, 1989
- **J. Brandrup ; E.H. Immergut.** Polymerhandbook. John Weley & Sons, 1989, 133-141
- Ullmann's Encyclopedia of Industrial Chemistry. Verlag Chemie, 1992, 169
- *Zosel in Farbe und Lack,* 1976, vol. 82, 125-134
- **T.G. Fox.** *Bull. Am. Phys. Soc.,* 1956, vol. 1, 123
- gemäß Ullmann's Encyclopädie der technischen Chemie. Verlag Chemie, 1980, vol. 19, 18, 4
- **J. Brandrup ; E.H. Immergut.** Polymer Handbook. J. Wiley, 1966
- POLYMER HANDBOOK. J. Wiley, 1975
- POLYMER HANDBOOK. J. Wiley, 1989
- Ullmann's Cncyclopedia of Industrial Chemistry. Verlag Chemie, 1992, 169
- **S.E. Harding et al.** Analytical Ultracentrifugation in Biochemistry and Polymer Science. Royal Society of Chemistry, 1992
- **W. Mächtle.** *Analysis of Polymer Dispersions with an Eight-Cell-AUC-Multiplexer: High Resolution Particle Size Distribution and Density Gradient Techniques,* 147-175
- *Adhäsive Age,* Juli 1987, 19-23
- *Polym. Mater. Sci. Eng.,* 1989, vol. 61, 588-592